Europäisches Patentamt

European Patent Office

Office européen des brevets

(19)

(11) Veröffentlichungsnummer: **0 105 416**
**B1**

(12) **EUROPÄISCHE PATENTSCHRIFT**

(45) Veröffentlichungstag der Patentschrift:
05.02.86

(21) Anmeldenummer: 83109429.7

(22) Anmeldetag: 22.09.83

(51) Int. Cl.⁴: **H 01 M 2/06**

(54) Gas- und flüssigkeitsdichte Polabdichtung für elektrische Akkumulatoren, insbesondere Bleiakkumulatoren.

(30) Priorität: 01.10.82 DE 3236370

(43) Veröffentlichungstag der Anmeldung:
18.04.84 Patentblatt 84/16

(45) Bekanntmachung des Hinweises auf die Patenterteilung:
05.02.86 Patentblatt 86/6

(84) Benannte Vertragsstaaten:
AT DE FR SE

(56) Entgegenhaltungen:
DE - A - 3 035 655
DE - A - 3 035 842
GB - A - 2 026 761
GB - A - 2 082 377

(73) Patentinhaber: VARTA Batterie Aktiengesellschaft, Am Leineufer 51, D-3000 Hannover 21 (DE)

(72) Erfinder: Illmann, Joachim, Landwehrriethe 18,
D-3008 Garbsen 9 (DE)
Erfinder: Gummelt, Klaus, Schulstrasse 2a,
D-3008 Garbsen 1 (DE)

(74) Vertreter: Kaiser, Dieter Ralf, Dipl.-Ing.,
Gundelhardtstrasse 72, D-6233 Kelkheim/Ts. (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

0 105 416

## Beschreibung

Die Erfindung betrifft eine gas- und flüssigkeitsdichte Polabdichtung für elektrische Akkumulatoren, insbesondere Bleiakkumulatoren, deren Gehäuse aus Kunststoff besteht.

Bei den heute immer noch üblichen Poldurchführungen werden als Übergangsteile zu diesem Zweck in den Gehäusedeckel eingepreßte oder auch eingespritzte Bleibuchsen verwendet. Durch die Bohrungen der Bleibuchsen werden dann Polschäfte geführt und diese mit den Bleibuchsen verschweißt. Während die Bleibuchsendurchführungen im Gehäusedeckel nach deren Herstellung zunächst dicht sind, geht diese Dichtigkeit, durch Schrumpfung des Kunststoffes bedingt, unter dem Hitzeeinfluß bei der nachfolgenden Schweißbehandlung wieder verloren. Wegen der unterschiedlichen Wärmeausdehnung von Metall und Kunststoff bilden sich Kapillarspalte, die ein Durchtreten der Säure mit unangenehmen Korrosionserscheinungen zur Folge haben.

Es sind aber auch Poldichtungen ohne Bleibuchsen bekannt. Bei diesen hat man versucht, etwa durch Haftvermittler eine hermetische Abdichtung zwischen metallischem Polableiter und dem Gehäusewerkstoff zu schaffen. Z.B. ist der DE-OS 30 35 842 eine Polabdichtung entnehmbar, bei welcher der Kunststoffdeckel um die Durchtrittsöffnung des Polschaftes herum topfartig erweitert und schichtweise mit verschiedenen Gießmassen aufgefüllt ist. Ein Schmelzkleber bildet hierbei die mittlere und ein Hartverguß aus säurefestem Zweikomponentenharz jeweils die angrenzende Boden- und Deckschicht.

Das Umgießen des Polschaftes in drei aufeinanderfolgenden Schritten ist umständlich. Außerdem werden Gießprozesse überhaupt bei rationellen Fertigungsverfahren gern vermieden.

Der Erfindung liegt deshalb die Aufgabe zugrunde, eine Polabdichtung anzugeben, die einfach herstellbar ist und dennoch höchstens Ansprüchen inbezug auf Dichtheit genügt.

Die Aufgabe wird erfindungsgemäß dadurch gelöst, daß der metallische Polschaft (1) eine erste, ringförmige Umspritzung (2) aus einem gummielastischen, thermoplastischen Kunststoff besitzt und daß die erste Umspritzung mit einem zweiten, weniger elastischen Kunststoffmaterial (3) vollständig umspritzt ist.

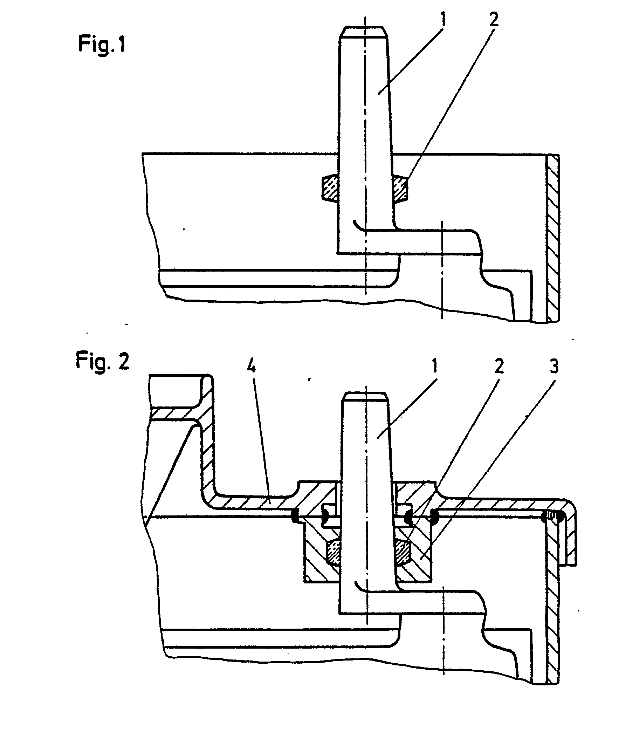

Der Erfindungsgegenstand wird am besten durch die Figuren 1 und 2 verdeutlicht.

Figur 1 zeigt die Polabdichtung in der ersten Herstellungsphase: den Polschaft mit der ersten ringförmigen Umspritzung. Figur 2 zeigt die fertige Polabdichtung, insbesondere den Polschaft mit seiner zweifachen Umspritzung.

Nach Figur 1 wird der Polschaft 1 erstmals mit einem gummielastischen thermoplastischen Kunststoff 2 ringförmig umspritzt. Ein für den erfindungsgemäßen Zweck besonders geeignetes Material ist ein thermoplastischer Kautschuk. Ein solcher Synthesekautschuk fällt als 'thermoplastisches Elastomer' in die jenige Gruppe der thermoplastischen Kunststoffe, die sich über einen weiten Temperaturbereich bis zur Fließtemperatur gummielastisch verhalten. Zu den Synthesekautschuken zählen u.a. cis-1,4-Polyisopren, Styrol-Butadien-Kautschuk, cis-1,4Polybutadien, Nitrilkautschuk, Urethankautschuk, Acrylesterkautschuk, chlorsulfoniertes Polyäthylen, Silikonkautschuk. Im erfindungsgemäßen Fall hat sich als thermoplastischer Kautschuk ein modifiziertes Polyolefin mit dem Handelsnamen 'Vestopren TP' (Produkt der Chemische Werke Hüls AG, D-4370 Marl 1) besonders bewährt.

In einem folgenden Arbeitsgang wird die Ringzone des elastischen Kunststoffs 2 mit einem weniger elastischen Kunststoff 3 so umspritzt, daß die erste Umspritzung völlig abgedeckt ist. Für die zweite Umspritzung wird vorzugsweise das gleiche Kunststoffmaterial wie der Gehäusewerkstoff, üblicherweise Polyäthylen oder Polypropylen, verwendet. Auf diese Weise läßt sich die zweite Umspritzung glatt mit dem Gehäusedeckel 4 spiegelverschweißen, wie es in Figur 2 dargestellt ist. Anstelle des Spiegelschweißens sind hier aber auch die Verfahren der Ultraschallschweißung oder der Reibschweißung anwendbar.

Die erfindungsgemäßen Maßnahmen haben eine erhebliche Materialeinsparung zum Ergebnis, wenn man als Vergleich konventionelle Poldurchführungen mit Bleibuchsen heranzieht. Aber auch gegenüber bekannten polbuchsenlosen Durchführungen sind sie weniger aufwendig in der Herstellung und in der Dichtwirkung mindestens ebenso zuverlässig.

Die erfindungsgemäße Abdichtung kommt dadurch zustande, daß nach der ersten Umspritzung das elastische Material infolge Schrumpfung kleine Freiräume entstehen läßt und daß diese von dem Kunststoff der zweiten Umspritzung, der zunächst einem hohen Spritzdruck und darauf ebenfalls einer Schrumpfung unterliegt, ausgefüllt und verschlossen werden. Dabei entstehen in der zweiten Umspritzung ebenfalls Schrumpfräume, in welche das gummielastische Material der ersten Umspritzung hineindeformiert wird. Auf diese Weise findet entlang der Übergangsfläche zwischen den Umspritzungen eine innige und dauerhafte Verzahnung der beiden verschiedenen Kunststoffe statt, aus der sich auch eine besondere Beständigkeit der Dichtung über die Akkumulator-Lebensdauer hinweg ergibt.

## Patentansprüche

1. Gas- und flüssigkeitsdichte Polabdichtung für elektrische Akkumulatoren, insbesondere Bleiakkumulatoren, deren Gehäuse aus Kunststoff besteht, dadurch gekennzeichnet, daß der metallische Polschaft (1) eine erste, ringförmige Umspritzung (2) aus einem gummielastischen, thermoplastischen Kunststoff besitzt und daß die erste Umspritzung mit einem zweiten, weniger elastischen Kunststoffmaterial (3) vollständig umspritzt ist.

2

2. Polabdichtung nach Anspruch 1, dadurch gekennzeichnet, daß der gummielastische Kunststoff der ersten Umspritzung ein thermoplastischer Kautschuk ist.

3. Polabdichtung nach den Ansprüchen 1 und 2, dadurch gekennzeichnet, daß der thermoplastische Kautschuk ein modifiziertes Polyolefin ist.

4. Polabdichtung nach den Ansprüchen 1 bis 3, dadurch gekennzeichnet, daß das zweite Kunststoffmaterial dem Kunststoff des Gehäuses entspricht.

5. Polabdichtung nach Anspruch 4, dadurch gekennzeichnet, daß das zweite Kunststoffmaterial Polypropylen ist.

6. Verfahren zur Herstellung einer Polabdichtung nach Anspruch 1, dadurch gekennzeichnet, daß der metallische Polschaft mit einem gummielastischen, thermoplastischen Kunststoff ringförmig umspritzt wird daß die Umspritzung mit einem weniger elastischen Kunststoff vollständig deckend umspritzt wird und daß durch Spiegelschweißung die zweite Umspritzung mit dem Gehäusedeckel verbunden wird.

**Revendications**

1.- Système d'étanchéité vis à vis des gaz et des liquides pour des bornes d'accumulateurs électriques, notamment d'accumulateurs au plomb, dont le bac est en matière plastique, système caractérisé en ce que le fût métallique (1) de la borne comporte une première injection périphérique annulaire (2) d'une matière synthétique thermoplastique présentant l'élasticité du caoutchouc, et que cette première injection périphérique est complètement entourée par une seconde matière plastique moins élastique (3).

2.- Système d'étanchéité selon la revendication 1, caractérisé en ce que la matière plastique présentant l'élasticité du caoutchouc de la première injection périphérique est un caoutchouc thermoplastique.

3.- Système d'étanchéité selon les revendications 1 et 2 caractérisé en ce que le caoutchouc thermoplastique est une polyoléfine modifiée.

4. - Système d'étanchéité selon les revendications 1 à 3, caractérisé en ce que la seconde matière plastique correspond à la matière plastique du bac.

5.- Système d'étanchéité selon la revendication 4, caractérisé en ce que la seconde matière plastique est du polypropylène.

6.- Procédé pour la réalisation d'un système d'étanchéité selon la revendication 1, caractérisé en ce que le fût métallique de la borne est entouré annulairement par injection d'une matière synthétique thermoplastique présentant l'élasticité du caoutchouc, cette injection périphérique étant entourée par injection d'une matière plastique moins élastique qui la recouvre completement, et que cette seconde injection périphérique est reliée au couvercle du bac par soudage à l'aide de réflecteurs.

**Claims**

1. Gas and liquid-tight sealing structure for terminal posts of electrical accumulators, particularly lead accumulators, the housing of which comprises plastics material, characterised in that the metal post shaft (1) has a first annular extrusion (2) of a resilient, thermoplastic synthetic material and that the first extrusion is completely extruded with a second less resilient plastics material (3).

2. Terminal post sealing structure according to claim 1, characterised in that the resilient plastics material of the first extrusion is a thermoplastic rubber.

3. Terminal post sealing structure according to claims and 1 and 2, characterised in that the thermoplastic rubber is a modified polyolefine.

4. Terminal post sealing structure according to claims 1 to 3, characterised in that the second plastics material corresponds to the plastics material of the housing.

5. Terminal post sealing structure.according to claims 1 to 3, characterised in that the second plastics material is polypropylene.

6. Method for producing a terminal post sealing structure according to claim 1, characterised in that the metal post shaft is extruded with a resilient, thermoplastic synthetic material so as to be annular, that the extrusion is extruded with a less resilient plastics material so as to be covered completely and that the second extrusion is connected to the housing cover by mirror welding.

0 105 416

Fig.1

Fig. 2